# FASCICULE DE BREVET EUROPEEN

(11) **EP 3 107 873 B1**
(45) Date de publication et mention de la délivrance du brevet: **30.11.2022**
(21) Numéro de dépôt: 15709274.3
(22) Date de dépôt: 18.02.2015
(51) Int. Cl.: A61J 1/05, A61J 1/14, C03C 21/00

(54) **PROCEDE ET DISPOSITIF DE PASSIVATION DE LA SURFACE INTERNE D'UN FLACON EN VERRE ET FLACON OBTENU AVEC UN TEL PROCEDE**
VERFAHREN UND VORRICHTUNG ZUR PASSIVIERUNG DER INNENFLÄCHE EINES GLASFLAKONS UND MIT DIESEM VERFAHREN HERGESTELLTER FLAKON
METHOD AND DEVICE FOR PASSIVATING THE INNER SURFACE OF A GLASS FLASK, AND FLASK OBTAINED WITH SUCH A METHOD

(30) Priorité: 18.02.2014 FR 1451304
(43) Date de publication de la demande: 28.12.2016
(73) Titulaire: Glass Surface Technology, 75015 Paris (FR)
(72) Inventeur: WAGNER, Christophe, 75015 Paris (FR)
(74) Mandataire: Benech, Frédéric
(86) Numéro de dépôt international: PCT/FR2015/050395
(87) Numéro de publication internationale: WO 2015/124865

(56) Documents cités:
- WO-A1-2009/116300
- WO-A1-2010/038776
- FR-A1- 2 126 097
- JP-A- H11 171 599

## Description

La présente invention concerne un procédé et un dispositif de passivation de la surface interne d'un flacon en verre.

Elle concerne également un flacon obtenu avec un tel procédé.

Par passivation on entend une extraction préalable à l'utilisation du flacon, des éléments susceptibles de sortir de la paroi interne du flacon pendant le contact avec les produits qui y seront stockés ultérieurement.

L'extraction doit être suffisante pour que les mesures pondérales de ces éléments soient en dessous d'un seuil déterminé fixé par les normes en vigueur.

Elle trouve une application particulièrement importante bien que non exclusive dans le domaine des interactions contenant-contenu et plus particulièrement celui du stockage dans des flacons en verre de produits pharmaceutiques ou cosmétiques, domaine dans lequel il est nécessaire de pouvoir conserver de façon neutre lesdits produits médicamenteux et/ou cosmétiques pendant un temps déterminé qui peut être assez long (par exemple plusieurs mois).

Classiquement on entend par verre neutre un verre qui libère dans le temps très peu d'ions sodium ou autres alcalins et/ou alcalino-terreux dans le liquide ou produit qui est à l'intérieur du récipient.

Le verre sodo-calcique n'est par exemple pas neutre au sens de la pharmacopée.

Mais l'invention est également applicable à d'autres domaines comme celui de l'agro-alimentaire.

On sait par exemple que lorsqu'un flacon en verre est fabriqué il est nécessairement porté à des températures importantes.

Celles-ci engendrent notamment une migration des alcali (dans le cas d'un verre au silicate) qui remontent à la surface du verre et/ou à sa proximité immédiate, de façon suffisante pour être exposés ultérieurement au contenu du récipient.

Les quantités d'alcali, bien que en général très petites sont gênantes dans le cas de flacons destinés à contenir des vaccins ou des principes actifs, qui doivent rester purs.

En effet l'alcalinité peut causer des effets désastreux sur un produit pharmaceutique, du fait de réactions inacceptables qui pourraient se produire entre la paroi du verre et le produit.

On connaît déjà des moyens d'éviter ce genre d'inconvénients par l'utilisation de dioxyde de soufre et/ou de difluoroéthane.

Le traitement peut également se faire lors même de l'élaboration du verre, où on introduit des précurseurs dans le four qui vont rendre le verre obtenu moins sujet à cette migration.

Mais plus généralement le traitement classique fait par les producteurs verriers consiste à traiter à chaud sur la ligne de production des flacons en verre soit au soufre, soit au fluor, ce qui donne la réaction (1) :

2 Na+ (verre) + (NH4)2SO4 (poudre) = Na2SO4 + 2H+ (verre) +2 NH3.

Le sulfate de sodium (voile blanc en surface interne des flacons) est ensuite lavé à l'eau avant remplissage.

Il existe aussi (WO 2009/116300 A1, WO 2010/038776 A1) des procédés de préparation de flacons prévoyant une suite d'étapes en continu qui comprennent, entre le moulage de flacons de verre à haute température et leur réchauffage pour libérer les tensions, une étape de refroidissement et une étape de lavage interne à des températures du verre pouvant atteindre 350°C.

Un mélange aqueux acide en présence d'un agent tensio-actif est ici utilisé pour le lavage.

De tels procédés d'une part ne sont prévus qu'avec des flacons de verre neufs chauffés, et d'autre part nécessitent l'utilisation de mélanges aqueux acides avec produits tensio-actifs, toujours compliqués à mettre en œuvre, dans le cadre d'un procédé en continu intégrant la fabrication des flacons eux-mêmes.

Enfin il est également connu d'utiliser le recouvrement de la paroi interne du flacon par une fine pellicule protectrice obtenue par traitement au plasma sous vide.

Tous ces procédés présentent des inconvénients.

Ils nécessitent en général des appareillages complexes et coûteux. Ils sont compliqués à mettre en œuvre (le traitement par sulfure nécessite par exemple la mise en œuvre de gaz ou poudre de maniement délicat) et pas toujours d'une fiabilité suffisante.

La présente invention vise à fournir un procédé, un dispositif et un flacon obtenu par un tel procédé, répondant mieux que ceux antérieurement connus aux exigences de la pratique, notamment en ce qu'elle n'engendre pas de dégagement de produits nocifs pour passiver ou protéger la paroi interne du flacon ou du récipient, en ce qu'elle ne nécessite pas de traitement violent ni de rinçage obligatoire avant et/ou après utilisation et en ce qu'elle permet de traiter tous les types de flacons, indépendamment des fournisseurs de ceux-ci et ce en engendrant moins de casse ou d'endommagement des récipients que dans l'art antérieur.

Pour ce faire l'invention part de l'idée d'utiliser les réactions chimiques de l'eau avec la paroi interne du récipient en verre, réactions qui se produisent avec tous les produits contenant de l'eau (y compris de l'air humide ou de la vapeur).

Le fait d'utiliser le vecteur de l'eau comme principal élément d'extraction n'a jamais été envisagé car classiquement considéré comme un processus insuffisant, l'eau étant plutôt réservée au lavage.

L'invention propose donc un procédé reposant sur l'activation plus ou moins importante de ces réactions, en tenant compte de la composition et de la concentration en alcali de la face interne du flacon en verre, et ce de façon à permettre les échanges ioniques entre le récipient et l'eau.

Ceux-ci se font sur la base de réaction (2) suivante :

2 SiO3-O-Na+ (verre) + H+OH (solution)---> 2 SiO3-OH (verre) + Na+OH- (solution)

Le verre est alors désalcalinisé en surface, l'échange ionique Na+ et H+ libérant des ions OH-dans la solution.

Il y a alors augmentation du pH indifféremment du verre en tant que tel, qui n'est pas fragilisé par cet échange.

Après traitement et en fonction des conditions de stockage (humidité et température), il est en général alors observé l'apparition de cristaux solubles à la surface du verre.

Cette apparition est également qualifiée d'exsudation et se forme avec les alcalins et/ou les alcalino terreux selon la réaction (3) suivante :

Na + and Ca ++ (verre) + H2O (humidité) and CO2 (de l'air) ----> Na2CO3 + CaCO3

La composition du verre, et notamment la quantité d'alcalins et d'alcalino-terreux qu'il contient, influent naturellement sur la résistance à l'eau et sur l'exsudation.

Par contre, quand le pH de la solution en contact avec le verre est supérieur à 10, une attaque des liaisons fortes du réseau se produit selon les réactions (4) équilibrées suivantes :

Si-O-Si + OH- --> Si-OH + Si-O-

H-OH + Si-O- --> Si-OH + OH--------------------------------

Si-O-Si + H-OH --> 2 Si-OH

La présente invention a donc notamment pour objet de mettre en œuvre ces principes avec les avantages ci-dessus mentionnés et en palliant les inconvénients de l'art antérieur.

Dans ce but, elle propose notamment un procédé de passivation de la paroi interne d'un récipient en verre propre à contenir un produit de qualité pharmaceutique, dans lequel on passive la surface interne du récipient, par échange ionique entre le récipient et un liquide aqueux d'extraction, caractérisé en ce que le liquide aqueux d'extraction est de l'eau de qualité R1,

et en ce que, pour passiver, on traite la surface interne du récipient par au moins trois passages du flacon en autoclave avec ledit liquide aqueux d'extraction à une température supérieure à 120°C pendant un temps supérieur à une heure, le liquide aqueux d'extraction étant changé à chaque fois, de sorte que la résistance hydrolytique mesurée de ladite surface soit rendue à tout le moins inférieure à 50% de la limite inférieure indiquée par la version 8 de la pharmacopée européenne.

En d'autres termes, de sorte que, la capacité de résister au relargage d'éléments est multipliée par deux au moins.

Un tel résultat est obtenu sans traitement ultérieur et dans des conditions de stockage appropriées, les mesures étant effectuées par exemple par le biais des méthodes de détermination prévues par la norme ISO 4802-2, ou par titrage suivant la norme ISO 4802-1.

Classiquement la résistance hydrolytique est mesurée avant traitement, et après traitement, par détermination de la quantité d'oxyde de sodium et d'autres oxydes alcalins ou alcalino-terreux relargués lors d'un traitement en autoclave à 121°C pendant 60 minutes, les mesures étant par exemple ensuite effectuées de façon connue en elle-même par spectrométrie de flamme.

Avec l'invention, on constate ainsi que des relargages ultérieurs notamment tels que testés de façon standardisée en autoclave comme décrit ci-dessus, ne permettent plus de mesurer des taux de relargages significatifs.

Le liquide aqueux d'extraction est de l'eau de qualité R1. On sait que l'eau de qualité R correspond à une eau purifiée par distillation, échange d'ions, osmose inverse ou par toutes autres méthodes appropriées, à partir d'une eau destinée à la consommation humaine.

La conductivité d'une telle eau est inférieure à 4,3 µS.cm⁻¹ à 20°C et à 5,1 µS.cm⁻¹ à 25°C, la limite du carbone organique total étant fixée à 0,5 mg/l. De plus l'eau R doit comprendre moins de 0,1 ppm de métaux lourds (Pb) et de 0,2 ppm de nitrate.

L'eau de qualité R1 est quant à elle une eau R décarbonatée par ébullition pendant 15 minutes, ou par toute autre méthode appropriée. Sa résistivité doit au minimum être de 1 MΩ.cm, soit une conductivité inférieure à 1 µS.cm⁻¹.

L'idée est ici d'utiliser l'autoclave qui ne l'a été jusqu'ici que pour faire des mesures, de façon industrielle en tant que traitement répété proprement dit (i.e. plus de trois fois de suite, par exemple cinq ou dix fois).

L'eau interne à l'autoclave permet en effet la réaction chimique recherchée, tout en conservant le liquide d'extraction sous forme liquide à plus haute température grâce à la pression (ce qui se révèle présenter une grande efficacité).

Le procédé est avantageusement mis en œuvre dans un mode non revendiqué, par un dispositif de passivation de la surface interne des flacons en verre caractérisé en ce qu'il comprend
des moyens de remplissage et/ou de vaporisation d'un liquide aqueux d'extraction dans les flacons,
un four ou une arche de cuisson,
des moyens de maintien de l'atmosphère de l'arche en saturation dudit liquide d'extraction,
des moyens de transport desdits flacons au travers de ladite arche pour un temps déterminé,
des moyens de refroidissement desdits flacons et
des moyens pour vider lesdits flacons s'il y a lieu après traitement.

L'invention propose également un flacon obtenu par le procédé décrit ci-dessus.

Elle concerne également un flacon présentant une surface interne libre non traitée au, et dénuée de soufre et/ou de fluor, dont la résistance hydrolytique R_{H} mesuré est inférieure à 50%, par exemple 20%, de la limite inférieure de résistance hydrolytique indiquée par la version 8 de la pharmacopée européenne pour ce type de flacon et de verre et dont la composition en surface sur une épaisseur e ≤ 10pm en alcalin ou alcalino-terreux est au moins 5% inférieure à la composition du verre dans la masse.

Il s'agit du type de verre et de contenance donnée du flacon correspondant à l'usage pharmaceutique. Par usage pharmaceutique on entend donc l'usage suivant la version 8 de la pharmacopée européenne éditée par la Direction Européenne de la Qualité du Médicament et soin de santé.

Par libre on entend non revêtu d'une pellicule de protection.

Par non traité au fluor et/ou au soufre on entend n'ayant pas subi les passivations connues de l'homme du métier au fluor et/ou Soufre.

On observe en effet que les flacons en verre traités selon l'invention, pour usage cosmétique, alimentaire ou pharmaceutique sont d'une résistance améliorée au vieillissement et à l'humidité de l'air, ce qui permet également d'éviter le phénomène connu d'exsudation avec l'air et donc de pouvoir utiliser les flacons traités plusieurs années après traitements sans avoir à les nettoyer.

Ils sont également d'une grande résistance hydrolytique (la résistance hydrolytique est diminuée de 50%, i.e. divisée par deux, par rapport au flacon non traité) ce qui permet de sécuriser le contact avec le produit et/ou de mettre en contact des produits plus agressifs.

Enfin, avec le procédé selon l'invention les flacons obtenus présentent une propreté améliorée de la surface interne, y compris grâce à l'élimination de poussières et de particules.

Avantageusement le récipient présente en outre et/ou de plus une composition en surface sur une épaisseur e ≤ 10pm, par exemple inférieure à 5pm, par exemple comprise entre 0.01µm et 0.5pm par exemple comprise entre 0.001µm et 0.01µm en alcalin ou alcalino-terreux au moins 5% inférieure à la composition de verre dans la masse.

L'invention sera mieux comprise à la lecture de la description qui suit de modes de réalisation décrits ci-après à titre d'exemples non limitatifs et en référence aux figures qui l'accompagnent dans lesquelles :
La figure 1 est un organigramme montrant les étapes d'un procédé de passivation selon un mode de réalisation de l'invention non revendiqué.
La figure 2 montre un organigramme des étapes du procédé selon un autre mode de réalisation de l'invention.
La figure 3 montre une courbe de l'évolution de la résistance hydrolytique RH en fonction des conditions de traitement.
La figure 4 montre schématiquement en perspective un mode de réalisation d'un dispositif mettant en œuvre le procédé décrit en référence à la figure 1.
La figure 5 montre en vue partielle éclatée, un exemple de paroi interne de récipient selon un mode de réalisation de l'invention, tel qu'obtenu par le procédé décrit en référence à la figure 1.

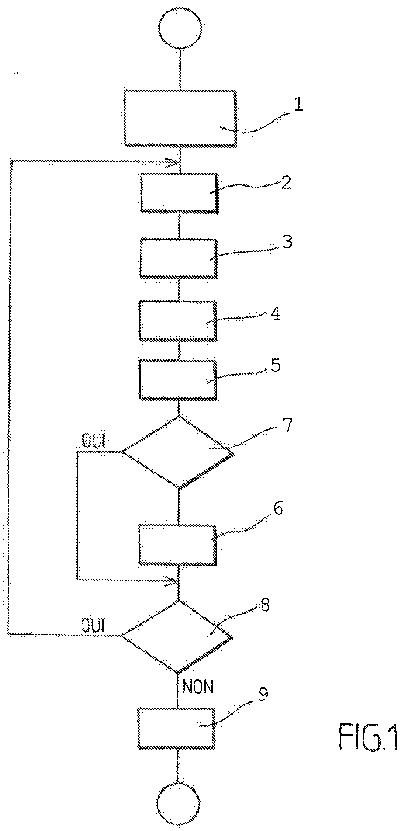

La figure 1 montre les étapes du procédé de passivation selon un mode de réalisation dont les étapes de passivation proprement dites ne correspondent pas à celles de l'invention tel que revendiquée ici, de la face interne d'un ou plusieurs flacons, par exemple des flacons pharmaceutiques ouverts, placés sur des supports amovibles de type rack.

Après une première étape 1 d'approvisionnement des flacons, ceux-ci sont remplis en liquide aqueux d'extraction (étape 2), par exemple en eau de qualité R1.

Dans un mode alternatif de réalisation le liquide aqueux est pulvérisé en brouillard à l'intérieur des flacons, de façon connue en elle-même, par exemple par le biais de buses individuelles automatiquement positionnées en face de l'ouverture des flacons.

La pulvérisation est adaptée pour assurer une fine couche continue de liquide sur une surface déterminée desdits flacons, qui sont ensuite placés dans une enceinte chauffante (étape 3), confinée et maintenue à une hygrométrie déterminée en liquide d'extraction.

Le taux d'hygrométrie est par exemple de 100%. De cette manière le contact entre le liquide d'extraction et la paroi interne du flacon est assuré en permanence.

L'enceinte chauffante est par exemple un four ou une arche électrique et/ou à gaz. Les flacons sont alors montés à une température déterminée comprise entre 70°C et 150°C par exemple 80°C, pendant un premier temps, par exemple de 15 mn de façon à éviter les chocs thermiques.

La température est contrôlée de façon connue en elle-même et le flacon est alors maintenu (étape 4) à ladite température déterminée pendant un deuxième temps déterminé par exemple 40 minutes.

Les flacons sont ensuite sortis du four (étape 5) ou de la zone de chauffage de celui-ci, pour être refroidis pendant un troisième temps déterminé, par exemple trois minutes, ici encore avec une cinétique adaptée pour éviter les chocs thermiques.

La température finale obtenue après refroidissement est par exemple la température ambiante.

Le liquide d'extraction restant est alors vidé (étape 6) s'il n'a pas été évaporé (test 7) dans une étape précédente.

Dans le mode de réalisation décrit, les étapes 2 à 6 sont réitérées (test 8) pour un nombre déterminé de fois, par exemple deux, de façon à obtenir une résistance hydrolytique inférieure au seuil déterminé préalablement choisi.

Lorsque plusieurs itérations du procédé sont effectuées, le liquide aqueux d'extraction est changé à chaque fois (réitération de l'étape 2).

Les flacons sont ensuite mais pas obligatoirement rincés puis séchés (étape 9) avant d'être stockés pour utilisation ultérieure.

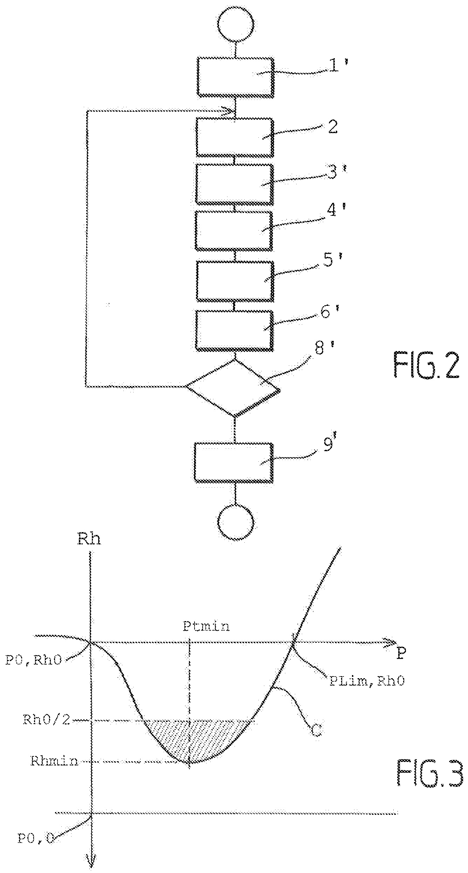

La figure 2 donne les étapes du procédé selon le mode de réalisation de l'invention utilisant un autoclave.

Celui-ci est de type connu en lui-même.

Après une première étape 1' d'approvisionnement des flacons, ceux-ci sont remplis en liquide aqueux d'extraction et sont fermés, par exemple par une feuille d'aluminium non étanche (étape 2).

Puis ils sont placés en autoclave (étape 3').

Le contenu de l'autoclave est alors porté, en respectant les paliers de montées en températures pour éviter les chocs thermiques, à la deuxième température déterminée (par exemple 121°C) et à la pression correspondante. Il est maintenu à celles-ci pendant le deuxième temps déterminé, par exemple supérieur à 1 heure (étape 4').

La pression à l'intérieur de l'autoclave est adaptée pour maintenir le liquide d'extraction en phase liquide. Par exemple pour 121°C, la pression est augmentée de 1atm (atmosphère) par rapport à la pression atmosphérique ambiante.

Les flacons sont ensuite redescendus en température par exemple à 80°C en respectant les contraintes du verre (étape 5').

Le flacon est alors vidé de son contenu (étape 6') et les étapes 2' à 6' sont réitérées (ligne 7') un nombre de fois supérieur à trois, par exemple cinq fois ou dix fois (test 8').

Les flacons sont ensuite évacués après un rinçage éventuel (étape 9').

Sur la figure 3 on a représenté l'influence des paramètres P du procédé sur son efficacité.

Les paramètres P sont les diverses températures et temps déterminés du procédé, les conditions de pression utilisées et la composition du liquide d'extraction.

La courbe C représente l'évolution de la résistance hydrolytique (RH) des parois internes des flacons en fonction de ces paramètres.

Plus un ou plusieurs des paramètres ont des valeurs importantes, plus le traitement va être agressif et à cinétique rapide.

Sachant que pour un verre donné et des conditions normales d'utilisation P0, (à savoir température et pression atmosphérique ambiante), pour de l'eau de qualité domestique, le verre comporte une résistance hydrolytique Rh0 dite de référence.

Après traitement en fonction de l'augmentation de la valeur des paramètres P, la résistance hydrolytique obtenue du verre traité Rh suit la courbe C jusqu'à un minimal Rmin (pour des paramètres Ptmin).

Le minimal de résistance Rh correspond alors à un minimum de relargage ultérieur d'éléments du verre dans le contenu.

Il est inférieur à Rh0/2.

Mais on constate qu'une augmentation de la valeur de l'un des paramètres par rapport au point minimal Ptmin de l'agressivité, fait par contre remonter la résistance hydrolytique jusqu'à passer de nouveau par Rh0 pour des paramètres PLim.

On observe aussi que si l'on augmente encore l'agressivité des paramètres au-delà de la limite PLim, la résistance hydrolytique est alors détériorée (du fait de la détérioration du verre lui-même).

L'invention propose un procédé qui permet de rester dans le sommet (inversé) de la courbe C (en trait hachuré sur la figure).

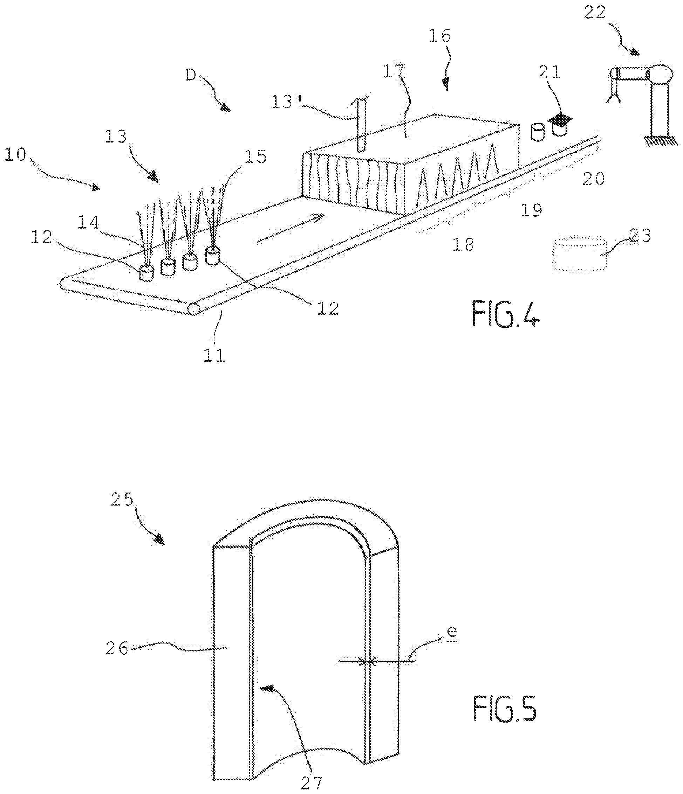

Il va maintenant être décrit en référence à la figure 4 un mode de réalisation d'un dispositif D mettant en œuvre le procédé dont les étapes essentielles sont non revendiquées, de la figure 1.

Le dispositif D comprend tout d'abord des moyens 11 de transport des flacons 12, comme par exemple un tapis roulant.

Les flacons 12 sont par exemple disposés individuellement sur le tapis roulant 11, ou insérés dans des supports (non représentés).

Des moyens 13 de remplissage et/ou de vaporisation/pulvérisation du liquide aqueux d'extraction 14 dans les flacons sont prévus.

Ces moyens sont connus en eux-mêmes.

Ils sont par exemple formés par des buses 15 à injection, qui viennent remplir ou pulvériser une quantité déterminée du liquide 14 dans chacun des flacons, par exemple en les remplissant à au moins 80% de leur volume.

Le liquide aqueux d'extraction est par exemple de l'eau de qualité R1 ou de l'eau acide citrique avec pH corrigé à 8.

Dans un autre mode de réalisation non revendiqué le liquide d'extraction est introduit sous forme de glace pilée dans les flacons, ce qui, pour une température d'ébullition donnée, allonge le temps de contact entre le liquide et la paroi interne et protège des chocs thermiques.

Le dispositif D comprend, disposé en aval de la zone de remplissage sur le tapis roulant, un four 16.

Le four 16 est par exemple une arche de chauffage 17 connue en elle-même, de cuisson électrique en atmosphère saturée à rideaux chauffant en forme de tunnel au travers duquel on fait donc lentement passer les flacons.

La zone chaude comprend successivement dans le sens de la marche du tapis roulant une première sous zone 18 de montée en température, une deuxième sous zone 19 de maintien d'une température donnée et un troisième sous zone 20 de refroidissement jusqu'à la température ambiante.

Le tapis roulant 11 fait ainsi pénétrer les flacons 12 dans la première sous zone 18 de l'arche 17 de cuisson qui effectue progressivement la montée en température jusqu'à une première température déterminée par exemple de 80°C.

Le tapis roulant 11 fait alors pénétrer les flacons 12 dans le deuxième sous zone 19 de chauffe qui comprend également des moyens 13' de maintien de l'atmosphère de l'arche en saturation du liquide d'extraction.

Ces moyens 13'comportent des moyens de contrôle et d'alimentation en liquide d'extraction de l'enceinte du four 17.

Dans des modes de réalisation le liquide 14 d'extraction est de l'acide acétique introduit en brouillard à l'intérieur de l'enceinte et donc des flacons, à une température supérieure à 80°C (par exemple 95°C) pendant le deuxième temps déterminé qui est supérieur à 30 mn.

Mais il peut également être prévu des buses d'injection (non représentées) du brouillard acide placées directement à l'intérieur de la zone chaude (four ou arche).

Le tapis roulant 11 à une vitesse et/ou une longueur adaptée pour que les flacons 12 restent dans ladite arche 17 pour un temps déterminé notamment aux températures de fonctionnement souhaitées.

Le tapis roulant 11 fait ensuite traverser aux flacons 12 la troisième sous zone chaude 20 comprenant des moyens de refroidissement desdits flacons.

Ces moyens (non représentés) peuvent être à l'air libre ou sous atmosphère contrôlée. Ici la commande (marche/arrêt), la vitesse et/ou la longueur du tapis roulant 11 doivent permettre une monté/redescente en température suffisamment lente pour prévenir les chocs thermiques mais adaptée à la cinétique réactionnelle.

Le fonctionnement du tapis roulant est donc programmé et commandé en conséquence.

Dans un mode de réalisation, les flacons sont vidés après traitement et obturés par exemple par une feuille d'aluminium 21 lors de leur redescente en température, ce qui va permettre de maintenir leur paroi interne en milieu aseptique.

En fin de course du tapis 11, le dispositif comprend également s'il y a lieu des moyens 22 permettant de basculer les flacons de façon connue en elle-même, pour les vider par exemple au-dessus d'une cuve de stockage 23, avant de les placer dans un autre poste de travail.

L'autre poste de travail peut être une unité d'emballage.

Il peut également être une unité de rinçage des flacons lorsque nécessaire, notamment si le vidage a été nécessaire.

Par contre, s'il existe le long du trajet du tapis roulant une zone de température supérieure au point d'ébullition du liquide d'extraction et ce pendant un temps suffisant, le flacon 12 n'auront a priori pas besoin d'étape de rinçage.

Il peut enfin s'agir d'un autre dispositif D de traitement et/ou de moyens de préhension permettant de remettre les flacons en début de chaîne pour réitérer le traitement un nombre déterminé de fois.

On va maintenant décrire, en référence à la figure 5, un flacon selon un mode de réalisation de l'invention.

Le flacon 25 (représenté en vue en coupe, éclatée, partielle) est formé en verre 26 constitué d'un réseau chimique dont des ions formateurs assurent la structure et des ions modificateurs, de liaison chimique plus faible avec le réseau, et qui forment les éléments (espèces chimiques résiduelles relarguées) dont l'invention propose notamment de réduire la quantité relâchée.

Par exemple les ions formateurs sont du SiO2, du Al2O3 présent à près de 74% de la masse total et du B2O3 présent à près de 12%.

Les ions modificateurs de réseau sont par exemple du Na2O et/ou du K2O à concurrence du pourcentage restant.

Tant que la surface est en contact avec le liquide il s'opère une réaction de substitution dans le verre entre les ions hydrogénés de la solution liquide et les autres ions du verre.

Ainsi la surface interne 27 du récipient 25 effectue un échange ionique entre le récipient et un liquide aqueux 14 d'extraction de sorte que la résistance hydrolytique de ladite surface 27 est au moins divisée par deux en valeur absolue (capacité de résistance multipliée par 2).

L'échange ionique produit ainsi une passivation du récipient.

Le flacon de la figure 5 a été traité par un procédé selon l'invention.

Il présente une surface interne 27 libre qui a été appauvrie en élément chimique relargable sur une épaisseur très fine e par exemple inférieure à 10pm.

Si lesdits flacons 25 sont par la suite non traités ils sont alors dénués de soufre et/ou de fluor et sont d'une résistance hydrolytique R_{H} inférieure à 50% de la limite inférieur indiquée par la pharmacopée européenne pour ce type de flacon et de verre.

En fonction de la qualité du verre initialement fourni, les flacons après traitement par l'invention présentent une résistance hydrolytique de paroi interne à tout le moins inférieure à 20% de la limite inférieure indiquée par la pharmacopée européenne.

On a donné dans le tableau ci-après les résultats de mesures réalisée, suivant le protocole de mesure ISO normée déjà mentionné avec différents traitements selon l'invention, dont certains selon des modes de réalisation non revendiqués ici :

**TABLEAU :**

| **Essai** | **Conditions de traitement** | **Résultats RH** | **Moyenne des RH** | **Différence entre la moyenne et la référence** |
|---|---|---|---|---|
| 0 | Référence | 0,2 | 0,14 | 0,00 |
| | | 0,1 | | |
| | | 0,15 | | |
| | | 0,14 | | |
| | | 0,12 | | |
| | | 0,12 | | |
| | | 0,13 | | |
| | | 0,15 | | |
| | | 0,14 | | |
| | | 0,16 | | |
| | | 0,19 | | |
| | | 0,12 | | |
| | | 0,13 | | |
| 1 | glace flacon | 0,1 | 0,09 | -0,05 |
| | bouché / introduction à 20°C montée | 0,1 | | |
| | jusqu'à 600°C en 300°C/h (palier 30 min à 600°C) | 0,08 | | |
| 2 | | 0,06 | | |
| | Brouillard 20 min | 0,06 | | |
| | acétique | 0,06 | 0,06 | -0,08 |
| 3 | brouillard | 0,04 | 0,06 | -0,08 |
| | acetique 30 min | 0,12 | | |
| | | 0,01 | | |
| 4 | Acide citrique 3 | 0,11 | 0,11 | -0,03 |
| | % pH= 8 étuve | 0,12 | | |
| | 80°C 24 h, flacon bouché alu | 0,1 | | |
| 5 | Acide citrique 3 % pH= 8 étuve 90°C 4 h, flacon bouché alu | 0,12 | 0,11 | -0,03 |
| | | 0,14 | | |
| | | 0,07 | | |
| | | 0,42 | | |
| | | 0,52 | | |
| 6 | NaOH 0,1 N 24h00 à température ambiante (flacon bouché) | exces | 0,11 | -0,03 |
| | | 0,11 | | |
| | | 0,1 | | |
| 7 | Autoclave eau R1 - 121°C 3 cycles | 0,1 | 0,05 | -0,10 |
| | | 0,03 | | |
| | | 0,07 | | |
| | | 0,07 | | |
| | | 0,08 | | |
| | | 0,03 | | |
| | | 0,03 | | |
| | | 0,02 | | |
| | | 0,04 | | |
| | | 0,03 | | |
| | | 0,05 | | |
| | | 0,03 | | |
| | | 0,02 | | |

Chaque mise en œuvre correspond à des conditions de paramètres spécifiques précisés dans la colonne « Conditions essai ».

Pour chaque ligne de « résultats RH », la valeur d'une mesure de résistance hydrolytique effectuée (par exemple il y a eu 13 mesures pour l'essai 7) est exprimée.

Pour un même « essai » les mesures sont moyennées dans la colonne « Moyenne de RH ». Chaque moyenne est comparée avec la mesure de référence de l'« essai 0 » et la différence entre les deux apparaît dans la colonne « Différence entre la moyenne et la référence ».

Les conditions de référence sont celles considérées ci-dessus comme les conditions normales donnant une résistance hydrolytique de base R0, avec un flacon stocké à vide après refroidissement pendant plusieurs semaines (ayant dès lors subi un vieillissement naturel dans des conditions normales de stockage à l'air libre assez longues).

Après remplissage avec l'eau dans les conditions normées, on effectue alors le test mentionné ci-dessus avec mesure du PH.

Dans les tests réalisés tels que décrits en référence au tableau, on mesure la totalité de ce qui est extrait du verre dont la silice qui en constitue une bonne partie et plus précisément tous les alcalins, les alcalino-terreux, ainsi que les ions formateurs (et non uniquement le Sodium).

En d'autres termes il s'agit d'une mesure permettant de déterminer la totalité du relargage indépendant de la quantité de Sodium.

Un résultat négatif de la différence indique que le traitement exécuté dans les conditions indiquées a amélioré la résistance hydrolytique du flacon considéré.

A l'inverse, un résultat positif indiquerait une dégradation.

Ainsi les mesures effectuées font apparaitre que le mode de réalisation de l'essai 7 dans lequel le procédé est mis en œuvre par un autoclave avec de l'eau de qualité R1 à 121°C pour trois cycles d'une heure permet de diminuer de près de trois fois la résistance hydrolytique et donc la rendre presque trois fois meilleure.

Comme il va de soi et comme il résulte également de ce qui précède, la présente invention n'est pas limitée aux modes de réalisation plus particulièrement décrits. Elle en embrasse au contraire toutes les variantes et notamment celles où les nombre de cycle, les températures, les pressions, et les durées sont déterminées différemment, en fonction du verre et des résultats recherchés, celles où le récipient est un pot ou un autre récipient en verre, et celles où les sous zones chaudes comprennent elles-mêmes des sous zones de variation de la température en descente et/ou en monté desdites températures.

## Revendications

1. Procédé de passivation de la paroi interne d'un récipient en verre propre à contenir un produit de qualité pharmaceutique, dans lequel on passive la surface interne du récipient, par échange ionique entre le récipient et un liquide aqueux d'extraction, **caractérisé en ce que** le liquide aqueux d'extraction est de l'eau de qualité R1,
et **en ce que**, pour passiver, on traite la surface interne du récipient par au moins trois passages du flacon en autoclave avec ledit liquide aqueux d'extraction à une température supérieure à 120°C pendant un temps supérieur à une heure, le liquide aqueux d'extraction étant changé à chaque fois, de sorte que la résistance hydrolytique mesurée de ladite surface soit rendue à tout le moins inférieure à 50% de la limite inférieure indiquée par la version 8 de la pharmacopée européenne.

2. Procédé de passivation selon la revendication 1, **caractérisé en ce que** le nombre de passages est de cinq ou dix fois.

3. Procédé de passivation selon l'une quelconque des revendications précédentes, **caractérisé en ce que** la résistance hydrolytique mesurée de ladite surface est au moins divisée par deux.

4. Procédé de passivation selon l'une quelconque des revendications précédentes, **caractérisé en ce que** la résistance hydrolytique mesurée de ladite surface est rendue à tout le moins inférieure à 20% de la limite inférieure indiquée par la version 8 de la pharmacopée européenne

5. Récipient en verre passivé selon l'une quelconque des revendications 1 à 4, présentant une surface interne libre non traitée au, et dénuée de, soufre et/ou de fluor, dont la résistance hydrolytique R_{H} est inférieure à 50% de la limite inférieure indiquée par la version 8 de la pharmacopée européenne pour ce type de flacon et de verre et dont la composition en surface sur une épaisseur e ≤ 10pm en alcalin ou alcalino-terreux est au moins 5% inférieure à la composition du verre dans la masse.

6. Récipient en verre passivé selon la revendication 5, **caractérisé en ce que** la résistance hydrolytique mesurée de ladite surface est rendue à tout le moins inférieure à 20% de la limite inférieure indiquée par la version 8 de la pharmacopée européenne.

## Patentansprüche

1. Verfahren zur Passivierung der Innenwand eines Behälters aus Glas, der geeignet ist, ein Produkt in pharmazeutischer Qualität zu enthalten, bei dem man die innere Oberfläche des Behälters durch Ionenaustausch zwischen dem Behälter und einer wässrigen Extraktionsflüssigkeit passiviert, **dadurch gekennzeichnet, dass** die wässrige Extraktionsflüssigkeit Wasser der Qualität R1 ist,
und dass man zum Passivieren die innere Oberfläche des Behälters mit mindestens drei Durchgängen des Flakons im Autoklav mit der wässrigen Extraktionsflüssigkeit bei einer Temperatur von mehr als 120 °C während einer Zeit von mehr als einer Stunde behandelt, wobei die wässrige Extraktionsflüssigkeit jedes Mal gewechselt wird, so dass die gemessene Wasserbeständigkeit der Oberfläche auf zumindest weniger als 50 % des unteren Grenzwerts gebracht wird, der von Version 8 des Europäischen Arzneibuchs angegeben wird.

2. Verfahren zur Passivierung nach Anspruch 1, **dadurch gekennzeichnet, dass** die Anzahl der Durchgänge fünf oder zehn Mal beträgt.

3. Verfahren zur Passivierung nach einem der vorhergehenden Ansprüche, **dadurch gekennzeichnet, dass** die gemessene Wasserbeständigkeit der Oberfläche mindestens durch zwei geteilt wird.

4. Verfahren zur Passivierung nach einem der vorhergehenden Ansprüche, **dadurch gekennzeichnet, dass** die gemessene Wasserbeständigkeit der Oberfläche auf zumindest weniger als 20 % des unteren Grenzwerts gebracht wird, der von Version 8 des Europäischen Arzneibuchs angegeben wird.

5. Behälter aus passiviertem Glas nach einem der Ansprüche 1 bis 4, aufweisend eine freie innere Oberfläche, die nicht behandelt mit und frei von Schwefel und/oder Fluor ist, dessen Wasserbeständigkeit R_{H} geringer als 50 % des unteren Grenzwerts ist, der von Version 8 des Europäischen Arzneibuchs für diese Art von Flakon und Glas angegeben wird, und dessen Zusammensetzung an der Oberfläche über eine Dicke e ≤ 10 µm an Alkali- oder Erdalkalielementen mindestens 5 % geringer als die Zusammensetzung des Glases in der Masse ist.

6. Behälter aus passiviertem Glas nach Anspruch 5, **dadurch gekennzeichnet, dass** die gemessene Wasserbeständigkeit der Oberfläche auf zumindest weniger als 20 % des unteren Grenzwerts gebracht wird, der von Version 8 des Europäischen Arzneibuchs angegeben wird.

## Claims

1. Process for passivation of the inner wall of a glass container suitable for containing a product of pharmaceutical quality, in which the inner surface of the container is passivated, by ion exchange between the container and an aqueous extraction liquid, **characterized in that** the aqueous extraction liquid is water of R1 quality,
and **in that**, in order to passivate, the inner surface of the container is treated by at least three passes of the bottle in an autoclave with said aqueous extraction liquid at a temperature above 120°C for a time greater than one hour, the aqueous extraction liquid being changed each time, so that the measured hydrolytic resistance of said surface is rendered at the very least less than 50% of the lower limit indicated by the 8^{th} edition of the European Pharmacopoeia.

2. Passivation process according to Claim 1, **characterized in that** the number of passes is five or ten times.

3. Passivation process according to either one of the preceding claims, **characterized in that** the measured hydrolytic resistance of said surface is at least halved.

4. Passivation process according to anyone of the preceding claims, **characterized in that** the measured hydrolytic resistance of said surface is rendered at the very least less than 20% of the lower limit indicated by the 8^{th} edition of the European Pharmacopoeia.

5. Glass container passivated according to any one of Claims 1 to 4, having a free inner surface not treated with, and free of, sulfur and/or fluorine, the hydrolytic resistance R_{H} of which is less than 50% of the lower limit indicated by the 8th edition of the European Pharmacopoeia for this type of bottle and glass and the alkaline or alkaline-earth surface composition of which, over a thickness e ≤ 10 µm, is at least 5% lower than the composition of the glass in the bulk.

6. Glass container passivated according to Claim 5, **characterized in that** the measured hydrolytic resistance of said surface is rendered at the very least less than 20% of the lower limit indicated by the 8^{th} edition of the European Pharmacopoeia.
